Europäisches Patentamt

**European Patent Office**

**Office européen des brevets**

(11) Numéro de publication: **0 249 528 B1**

(12) **FASCICULE DE BREVET EUROPEEN**

(45) Date de publication de fascicule du brevet: **16.12.92** (51) Int. Cl.⁵: **F16D 3/84**

(21) Numéro de dépôt: **87401221.4**

(22) Date de dépôt: **02.06.87**

(54) **Soufflet de protection, notamment pour transmission avant de véhicule automobile.**

(30) Priorité: **13.06.86 FR 8608544**

(43) Date de publication de la demande:
**16.12.87 Bulletin 87/51**

(45) Mention de la délivrance du brevet:
**16.12.92 Bulletin 92/51**

(84) Etats contractants désignés:
**DE ES GB IT SE**

(56) Documents cités:
**EP-A- 0 113 271    WO-A-85/05422**
**DE-A- 3 324 997    DE-A- 3 508 718**
**DE-C- 3 309 386    GB-A- 1 168 943**
**US-A- 4 224 808**

(73) Titulaire: **COMPAGNIE DES PRODUITS INDUS-TRIELS DE L'OUEST (C.P.I.O.)**
**Boîte Postale 1226 Zone Industrielle de Nantes Carquefou**
**F-44023 Nantes Cédex(FR)**

(72) Inventeur: **Lallement, Serge**
**2 les Hauts de l'Erdre**
**F-44240 La Chapelle sur Erdre(FR)**
Inventeur: **Copie, Philippe**
**Chemin de la Maillardière**
**F-44700 Orvault(FR)**
Inventeur: **Sclavon, Christian**
**10 rue du Portail Rouge**
**F-44300 Nantes(FR)**

(74) Mandataire: **Foster, David Martyn et al**
**MATHISEN MACARA & CO. The Coach House 6-8 Swakeleys Road**
**Ickenham Uxbridge UB10 8BZ(GB)**

## Description

L'invention concerne un soufflet de protection en matière thermo-plastique, notamment pour les transmissions avant de véhicule automobile comportant une série de plis dont le diamètre extérieur n'excède pas le diamètre de fixation du soufflet sur le bol du joint de transmission.

Un tel soufflet est connu de DE-A-3 508 718. Un tel soufflet est conçu pour assurer un élement protecteur en matériau thermoplastique pour joints de cardan à tripode ou à billes dont le profil autorise de grands débattements angulaires et dont la mise en oeuvre est aisée suivant des moyens de transformations conventionnels tels que extrusion-soufflage et injection-soufflage. Il doit assurer une protection dynamique du joint de cardan vis-à-vis des agressions extérieures et contenir la graisse de lubrification du joint.

Ces pièces ont donc une fonction d'étanchéité dynamique du joint de cardan qui est déterminante pour la longévité de la transmission du véhicule.

La récente utilisation des matériaux thermoplastiques pour la réalisation de tels éléments protecteurs s'est traduite par l'apparition de profils de soufflets généralement dérivés des formes utilisées pour le caoutchouc.

La transposition des profils de soufflets en caoutchouc aux profils de soufflets réalisés en thermoplastique par une opération de soufflage n'est pas dépourvue d'inconvénients. En effet, ces profils dérivés des formes injectées en caoutchouc ne tiennent aucunement compte des contraintes de transformation liées aux techniques d'extrusion-soufflage ou d'injection-soufflage.

De surcroît ces profils sont inadaptés aux caractéristiques intrinsèques du matériau thermoplastique qui sont totalement différentes de celles propres au caoutchouc.

A celà se superposent des contraintes d'ordre fonctionnel qui imposent une cinématique particulière du soufflet lors des débattements angulaires du joint, cinématique que l'on ne peut correctement obtenir à partie de profilés dérivés des produits antérieurs réalisés en caoutchouc. Une telle conception de soufflet conduit généralement à des profils volumineux comportant des spires d'angles aigus qui suivent une génératrice conique.

Cette configuration de soufflet entraîne une grande variation des épaisseurs de matière entre crêtes et creux de spires susceptible d'induire des points de fragilité en fatigue en mode de flexion alternée correspondant aux débattements angulaires du joint de cardan. De surcroît, ces profiles volumineux confèrent au soufflet une stabilité dynamique médiocre à hautes vitesses de rotation du joint de cardan et ont pour effet, également, d'accroîte les contraintes mécaniques appliquées aux spires sous forts débattements angulaires.

En conséquence, le soufflet spécifié ci-dessus est caracterisé par le fait que chacun de ces plis a une forme spécifique de forme et de dimension différente l'un de l'autre qui correspond à une fonction précise pour limiter l'usure prématurée du soufflet lors des grands débattements, en ce qu'au moins une spire est de type rotulaire, possédant un profil arrondi, dont la surface externe est analogue à celle d'un tore de section éliptique, et au moins une spire assure une réserve de surface développée par les angles de braquage maximaux, et par une jupe rigide entre ces deux spires faisant office d'entretoise.

L'invention sera décrite au regard des figures 1 à 4 ci-jointes, données à titre d'exemples non limitatifs, et qui se rapportent respectivement:
- la figure 1, à une vue en demi-coupe longitudinale et en demi-vue extérieure d'un soufflet conforme à l'invention;
- les figures 2 et 3, à une couple longitudinale, respectivement sans et avec braquage des roues, d'un soufflet conforme à l'invention;
- la figure 4, à une vue de détail en demi-coupe des spires composant le soufflet conforme à l'invention.

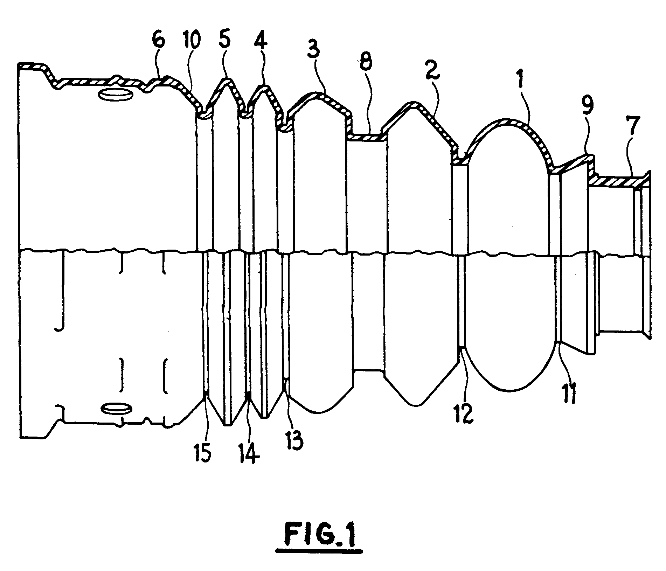

Le soufflet, selon l'invention, illustré aux figures 1 et suivantes, repose sur une conception de profil présentant une génératrice conique supportant plusieurs spires spécifiques dont chacune a une fonction précise.

La figure 1 montre l'état du soufflet, selon l'invention, suivant sa configuration d'obtention.

La géométrie du soufflet est définie de manière à assurer les points suivants :
- à chacune de ses extrêmités, sa forme est adaptée de manière à ce que les profils 6 et 7 puissent être fixés respectivement sur le bol 10 et sur l'arbre ou le tube du joint de transmission 30.
- le profil de protection dynamique du soufflet qui relie le tube 30 au bol 10 est composé des spires 1, 2, 3, 4 et 5 et de la jupe cylindrique 8 suivant une génératrice conique et de telle manière que le plus grand diamètre de spire 5 n'excède pas le diamètre de fixation du bol 10 correspondant au profil 6.

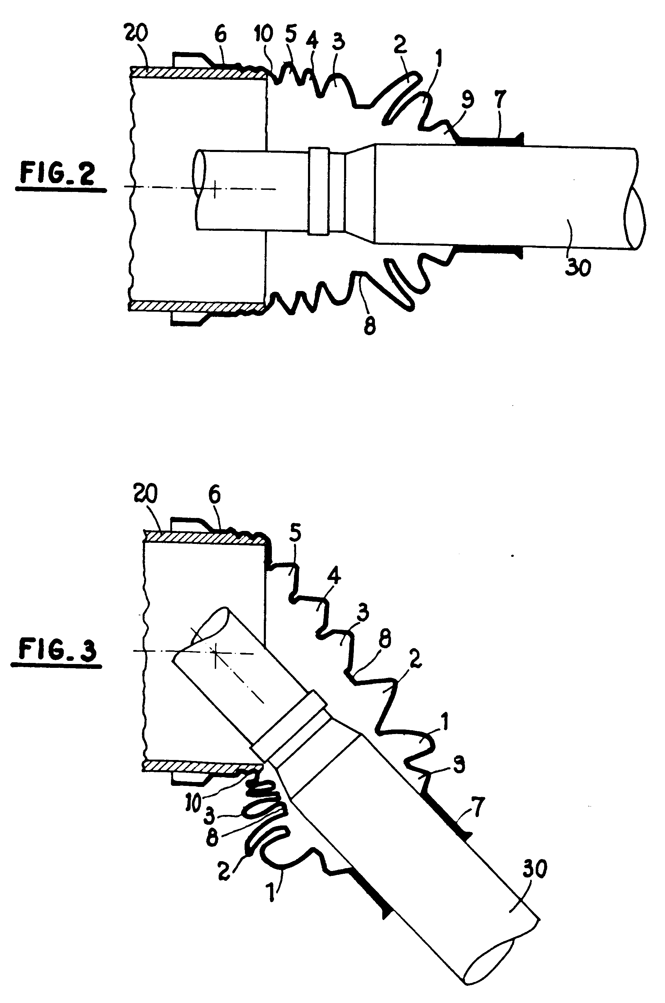

La figure 2 montre l'état du soufflet selon l'invention, mis en place sur l'élément de transmission 30 à revêtir et dont l'angle de braquage est nul.

On constate, suivant cette figure, que le soufflet est monté précontraint, c'est-à-dire que la côte de longueur du soufflet mis en place sur l'élément de transmission est inférieure à sa longueur d'obtention à l'état libre.

Cette précontrainte de montage confère au soufflet une cinématique de fonctionnement originale, ainsi qu'il apparaît sur la figure 3 montrant le soufflet selon l'invention soumis à un angle important de braquage de l'élément de transmission 30, et dont le fonctionnement repose sur les particularités suivantes :

- la précontrainte de montage est telle que le soufflet monté sur l'élément de transmission a une longueur de 70 à 85 % de la longueur d'obtention. Suivant cette condition de montage, les spires prennent chacune une position particulière prédéterminée par leur profil de conception.

Ainsi qu'il apparaît sur la figure 2, lorsque le soufflet est en place, les spires ont les positions suivantes :

- la spire 1, précontrainte, bascule légèrement vers le cône d'articulation 9, par un effet de roulage qui lui confère son profil arrondi. Cette spire se comporte comme une rotule d'articulation, elle est déterminante pour la cinématique optimum du soufflet ainsi qu'il sera détaillé ci-après.
- la spire 2, grâce à son profil à pentes asymétriques, se referme et bascule complètement sur la spire 1. Cette spire aura pour rôle principal d'absorber les élongations maximales de la partie en extension du protecteur lors du braquage maximal du joint de transmission.
- la jupe 8, rigide fait office d'entretoise entre les spires 2 et 3 ; elle maintient ces dernières à une distance optimale de fonctionnement. Elle a pour rôle principal, déviter tout frottement relatif entre ces deux spires 2, 3 pour des angles de braquage très importants.
- la spire 3, du fait de sa faible hauteur, n'est que très légèrement comprimée. Par sa relative rigidité cette spire 3 permet d'interdire tout effet rentrant de la spire 2 vers l'intérieur du bol 20 dont les arêtes vives du tripode pourraient agresser les pieds de ladite spire 3.
- les spires 4 et 5 se referment et constituent ainsi une réserve de surface développée indispensable lors des angles de braquage maximaux.

Le soufflet, ainsi précontraint, peut absorber les angles extrêmes de braquage de roue qu'il ne saurait absorber non-précontraint compte-tenu de la faible élasticité propre de la matière thermoplastique le constituant, à la différence du caoutchouc.

La figure 3 détaille la cinématique particulière du soufflet selon l'invention pour un angle de braquage maximal du joint de transmission.

Suivant cette conception, on constate que la forme de développement maximale du soufflet correspondant à la partie tendue est assurée grâce à l'ouverture des spires 2, 3, 4 et 5 de la valeur exacte de la précontrainte de montage. On remarquera que suivant cette conception le profil du soufflet ne travaille jamais en élongation propre ; ceci a pour effet de minimiser les contraintes qu'il supporte et donc d'accroître sa longévité.

Lors des braquages du joint de transmission 30, la spire 1 possède une cinématique particulière du type rotulaire qui permet d'absorber la combinaison des contraintes de traction et de rotation, maximales au point le plus éloigné du centre instantané de rotation du joint de transmission 30, c'est-à-dire au niveau de cette même spire 1.

Dans la zone d'angle fermé du joint de transmission 30, l'arrangement des spires se fait suivant le mécanisme suivant :

- les spires 3, 4 et 5 se referment et se couchent sur le profil 10 qui interdit tout mouvement rentrant entre le bol 20 et l'arbre ou tube de transmission 30.
- la spire 2 se referme et bascule suivant sa cinématique particulière sur la rotule 1.
- la jupe 8 maintient à distance les spires 2 et 3 interdisant tout frottement relatif entre-elles, donc tout risque d'abrasion.
- la spire 1 constitue un point souple qui absorbe les contraintes de compression de l'ensemble des spires ainsi contenues dans l'angle fermé constitué par l'arbre 30 et le bol 20.

Le mécanisme de fonctionnement de ce soufflet est obtenu par l'agencement particulier des spires décrit ci-dessus, mais également grâce aux charnières qui constituent les pieds de spires 11, 12, 13 et 14 (figure 1) et dont le profil a été optimisé.

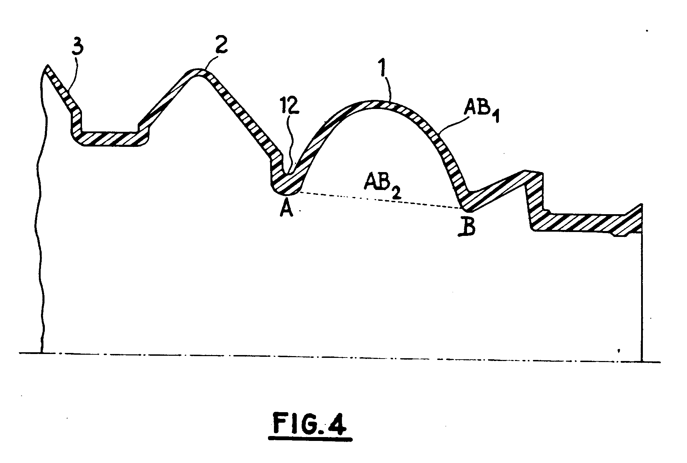

La figure 4 montre en détail les deux première spires 1 et 2 du soufflet selon l'invention dans l'état d'obtention du profil. On retrouve la spire 1 dont le profil arrondi permet d'obtenir une cinématique de type rotulaire.

La conception de cette spire 1 est telle que sa surface externe correspond à celle d'un tore de section elliptique ; cette géométrie lui confère d'une part son fonctionnement particulier et permet d'autre part d'optimiser la répartition des épaisseurs de matière suivant la technique de soufflage mentionnée ci-après.

Sur cette même figure 4, on retrouve également la spire 2 dont la section est composée, comme on l'a vu plus haut, de deux parties opposées et asymétriques, raccordées par un profil arrondi ; cette asymétrie de conception permet d'obtenir l'effet de basculement dans la position précontrainte de montage, bien visible à la figure 2.

Ces deux spires sont raccordées par une charnière ou pied de spire 12 dont le profil est particulier.

Notons que tous les pieds de spires 11 à 15 du soufflet de l'invention sont conformes à la définition ci-dessous.

Le pied de spire ou charnière 12 est détaillé à la figure 4 ; cette charnière 12 est composée d'une gorge droite dont le fond est à section circulaire. Cette gorge possède une profondeur totale qui peut varier de 1 à 2 mm, pour une largeur comprise entre 1 et 1, 7 mm. Ce profil particulier permet, d'une part d'étirer correctement la matière qui le constitue lors de la mise en oeuvre par soufflage en évitant sa concentration, et d'autre part, sa base à section circulaire minimise les contraintes mécaniques en mode de flexion alternée et permet d'augmenter très sensiblement la longévitié du soufflet notamment en comportement dynamique à froid.

La conception particulière du profil des spires composant le soufflet selon l'invention permet de pallier certains inconvénients liés aux techniques de soufflage.

Les techniques de soufflage, très utilisées, pour la fabrication des corps creux en matières plastiques, consistent à souffler un tube ou une préforme à l'état préalablement placé dans un moule composé de deux demi-coquilles dont les empreintes sont aux formes externes du corps creux à obtenir. Suivant cette technique, le tube ou la préforme est soufflée de façon interne par de l'air sous pression ; le tube ou la préforme se gonfle alors et se plaque progressivement contre les faces internes des empreintes du moule où elle se solidifie, la température de ce dernier étant inférieure à la température de ramollissement de la matière traitée.

Chaque spire composant le soufflet, selon l'invention, est conçue géométriquement de la façon suivante :

- Le rapport de la surface $AB_1$ développée de la spire 1 sur la surface $AB_2$ de la portion de cylindre correspondante suivant l'axe de symétrie du soufflet, délimitée par les deux pieds A-B de la spire 1 est compris entre 1,4 et 2.

Suivant le détail de la figure 4, ceci revient à dire que :

$$1,4 < \frac{AB_1}{AB_2} < 2.$$

Ce rapport détermine la variation optimale d'épaisseur de la matière le long du profil du soufflet ci-dessus.

Le soufflet de l'invention présente un rapport

$$\frac{AB_1}{AB_2}$$

identique d'une spire à l'autre, ce qui lui assure une répartition d'épaisseur homogène et améliore ainsi sa qualité et sa longévité.

## Revendications

1. Soufflet de protection en matière thermo-plastique, notamment pour les transmissions avant de véhicule automobile, comportant une série de plis dont le diamètre extérieur n'excède pas le diamètre de fixation du soufflet sur le bol du joint de transmission, caractérisé par le fait que chacun de ces plis (1,2,3,4 et 5) a une forme spécifique de forme et de dimension différente l'un de l'autre qui correspond à une fonction précise pour limiter l'usure prématurée du soufflet lors des grands débattements, en ce qu'au moins une spire (1) est de type rotulaire, possédant un profil arrondi, dont la surface externe est analogue à celle d'un tore de section éliptique, et au moins une spire (4-5) assure une réserve de surface développée par les angles de braquage maximaux, et par une jupe rigide (8) entre ces deux spires (1,4-5) faisant office d'entretoise.

2. Soufflet de protection selon la revendication 1, caractérisé en ce qu'il est monté précontraint suivant son axe de symétrie, sa longueur de montage devenant de l'ordre de 70% à 85% de sa longueur à l'état libre.

3. Soufflet selon la revendication 1 ou 2, caractérisé en ce qu'il possède au moins une spire (2) dont le profil est composé de deux pentes assymétriques raccordées par une forme arrondie, le côté le plus grand dirigé vers la spire (1) voisine de type rotulaire, sur laquelle il bascule sous l'action d'une précontrainte.

4. Soufflet selon la revendication 1, 2 ou 3, caractérisé en ce qu'il comporte au moins une spire (3) de faible hauteur, voisine de la spire (2), composée de deux pentes assymétriques qu'elle empêche de rentrer à l'intérieur du bol (20) de transmission.

## Claims

1. Protective bellows of thermoplastic material, particularly for the front transmissions of motor vehicles, comprising a series of pleats, the outer diameter of which does not exceed the mounting diameter of the bellows on the bowl of the transmission joint, characterised in that each of these pleats (1, 2, 3, 4 and 5) has a specific shape, of different shape and size from one another, which corresponds to a precise function so as to limit the premature wear of the bellows during sharp deflections, in that at least one turn (1) is of ball joint type, possessing a rounded profile, the outer surface of which is similar to that of a torus of elliptical cross-section, and at least one turn (4-5) provides an expanse of surface area produced by the maximum angles of lock and by a rigid skirt (8) between these two turns (1, 4-5) serving as a spacer.

2. Protective bellows according to Claim 1, characterised in that it is mounted prestressed along its axis of symmetry, its assembled length becoming of the order of 70% to 85% of its length in the free state.

3. Bellows according to Claim 1 or 2, characterised in that it possesses at least one turn (2), the profile of which consists of two assymetrical slopes connected by a rounded shape, the larger side directed towards the neighbouring turn (1) of ball joint type, onto which turn (1) it tilts under the action of a prestress.

4. Bellows according to Claim 1, 2 or 3, characterised in that it comprises at least one turn (3) of low height, in the vicinity of the turn (2), consisting of two assymetrical slopes which it prevents from entering the interior of the transmission bowl (20).

**Patentansprüche**

1. Schutzfaltenbalg aus thermoplastischem Material, vor allem für die Vorderantriebe von Kraftfahrzeugen, der eine Serie von Falten enthält, deren Außendurchmesser nicht größer ist als der Durchmesser der Befestigung des Schutzfaltenbalgs auf der Transmissionsschale,
dadurch **gekennzeichnet,**
daß jede seiner Falten (1, 2, 3, 4 und 5) eine spezifische Form hat, in Form und Abmessung verschieden die eine von der anderen was einer genauen Funktion entspricht um die vorzeitige Abnützung des Schutzfaltenbalgs bei großen Lenkausschlägen zu begrenzen, dadurch, daß zumindest eine Windung (1) von kugelgelenkartigem Typ ist, dabei ein abgerundetes Profil besitzt dessen Außenfläche der eines Torus von elyptischem Querschnitt analog ist, und zumindest eine Windung (4-5) eine Flächenreserve sichert für die maximalen Lenkausschlagwinkel, und durch eine steife Schürze (8) zwischen diesen beiden Windungen (4-5) die als Distanzstück dient.

2. Schutzfaltenbalg nach Anspruch 1, dadurch gekennzeichnet, daß er vorgespannt montiert ist in der Richtung seiner Symetrieachse, wobei seine Länge im montierten Zustand 70% bis 85% seiner Länge im freien Zustand beträgt.

3. Schutzfaltenbalg nach Anspruch 1 oder 2, dadurch gekennzeichnet, daß er zumindest eine Windung (2) besitzt, deren Profil sich zusammensetzt aus zwei asymetrischen Neigungen verbunden durch eine abgerundete Form, wobei die größere Seite ausgerichtet ist nach der benachbarten Windung (1) von kugelgelenkartigem Typ, über die sie sich neigt unter der Wirkung einer Vorspannung.

4. Schutzfaltenbalg nach Anspruch 1, 2, oder 3, dadurch gekennzeichnet, daß er zumindest eine Windung (3) von geringer Höhe enthält, der Windung (2) benachbart, zusammengesetzt aus zwei asymetrischen Neigungen, die sie daran hindern, ins Innere der Transmissionsschale (20) zu gelangen.

FIG.1

FIG.2

FIG.3

**FIG.4**